# EUROPÄISCHE PATENTSCHRIFT

(11) **EP 1 773 533 B1**
(45) Veröffentlichungstag und Bekanntmachung des Hinweises auf die Patenterteilung: **10.12.2014**
(21) Anmeldenummer: 05763060.0
(22) Anmeldetag: 02.08.2005
(51) Int. Cl.: B23K 1/19, B23K 9/23, B23D 27/00, B23D 35/00

(54) **Verfahren und Vorrichtung zum Herstellen einer zumindest auf einer Seite abgeschrägten Stosskante eines Bleches aus einem Eisen- oder Titanwerkstoff**
Method and apparatus for the production of a border bevelled on at least one side on a sheet made from an iron or titanium material
Procédé et dispositif pour réaliser un bord biseauté au moins d'un côté sur une tôle constituée d'un matériau à base de fer ou de titane

(30) Priorität: 04.08.2004 AT 13392004
(43) Veröffentlichungstag der Anmeldung: 18.04.2007
(73) Patentinhaber: voestalpine Stahl GmbH, 4020 Linz (AT)
(72) Erfinder: SCHMARANZER, Christian, A 4072 Alkoven (AT); LEITNER, Alois, A-4852 Weyregg am Attersee (AT); RECHBERGER, Roland, 4221 Steyregg (AT)
(74) Vertreter: Jell, Friedrich
(86) Internationale Anmeldenummer: PCT/AT2005/000303
(87) Internationale Veröffentlichungsnummer: WO 2006/012659

(56) Entgegenhaltungen:
- WO-A-2004/030856
- US-A- 3 565 309
- US-A- 3 585 830

## Beschreibung

Die Erfindung bezieht sich auf ein Verfahren zum Herstellen einer zumindest auf einer Seite abgeschrägten Stoßkante eines Bleches aus einem Eisen- oder Titanwerkstoff gemäß Anspruch 1 und eine Vorrichtung zur Durchführung des Verfahren gemäß Anspruch 2, das mit einem Blech aus einem Aluminiumwerkstoff durch eine Schweiß-Lötverbindung unter Verwendung eines Zusatzwerkstoffes auf Aluminiumbasis gefügt wird und im Fügebereich eine Beschichtung vorzugsweise auf Zink- oder Aluminiumbasis aufweist.

Um zwei stumpf stoßende Bleche einerseits aus einem Eisen- oder Titanwerkstoff und anderseits aus einem Aluminiumwerkstoff durch eine Schweiß-Lötverbindung zu fügen, ist es bekannt (WO 2004/030856 A1), einen Zusatzwerkstoff auf Aluminiumbasis zur Ausbildung der Verbindungsnaht auf beiden Blechseiten in einem den Stoß überbrückenden Bereich auf das Blech aus dem Eisen- oder Titanwerkstoff in einer wenigstens der dreifachen Dicke dieses Bleches entsprechenden Breite aufzubringen. Durch die Beschichtung des Eisen- oder Titanwerkstoffes im Fügebereich vorzugsweise auf Zink- oder Aluminiumbasis vor dem Aufbringen des Zusatzwerkstoffes wird die Neigung zur Bildung spröder, intermetallischer Phasen verringert, was eine wesentliche Voraussetzung für die geforderte Belastbarkeit solcher Verbindungen darstellt. Durch eine Abschrägung des Bleches aus dem Eisen- oder Titanwerkstoff im Bereich der Stoßkante zumindest auf einer Blechseite verringert sich der tragende Querschnitt des Eisen- oder Titanwerkstoffes gegen den Aluminiumwerkstoff hin, so dass eine allmähliche Lastübernahme zwischen den unterschiedlichen Werkstoffen unter einer Vermeidung übermäßiger Spannungsspitzen stattfindet. Diese Abschrägung muss aber wie der übrige Fügebereich mit einer Beschichtung auf Zink-, Zinn- oder Aluminiumbasis abgedeckt werden, um die werkstoffliche Anbindung zwischen dem Eisen- oder Titanwerkstoff und dem Zusatzwerkstoff zu gewährleisten. Dies bedeutet, dass nach einer spanabhebenden Bearbeitung der Stoßkanten zur Herstellung der Abschrägung die Beschichtung zumindest im Bereich der Abschrägungen aufgebracht werden muss, vorzugsweise elektrolytisch. Diese nachträgliche Beschichtung der Abschrägungen erhöht nicht nur den Herstellungsaufwand, sondern bringt auch wegen der durch die Abschrägung gebildeten Spitzen eine inhomogene Abscheidung unter einer Dendritenausbildung insbesondere im Spitzenbereich mit sich, was sich nachteilig auf das Benetzungsverhalten des Zusatzwerkstoffes auf dem Blech aus dem Eisen- oder Titanwerkstoff auswirkt. Außerdem ergeben sich in der Verbindungsnaht vermehrt Poren, wahrscheinlich aufgrund der Verdampfung beispielsweise des Zinks der Beschichtung beim Aufschmelzen des Zusatzwerkstoffes.

Um beim Warmwalzen von Blechen insbesondere aus einem Aluminiumwerkstoff das Einziehen der Bandenden in den Walzspalt zu erleichtern und Faltenbildungen im Endbereich zufolge einer größeren Längung der Bleche in einer Oberflächenschicht zu vermeiden, ist es außerdem bekannt (US 3 565 309 A), eine keilförmig vorstehende Stoßkante zu formen, und zwar mit Hilfe von zwei keilförmigen Prägewerkzeugen, die bis auf einen verbleibenden Restabstand gegeneinander von beiden Seiten in das Blech gedrückt werden und dabei eine entsprechende Abschrägung der Blechkanten durch ein Fließen des Werkstoffes bewirken. Der verbleibende Restabstand sichert eine Bruchtrennung unter Ausbildung eines Steges zwischen den abgeschrägten Stoßflächen. Eine solche Formung der abgeschrägten Stoßkanten kann jedoch keine Lehre zur Verbesserung der Verbindung zwischen zwei Blechen einerseits aus einem Eisen- bzw. Titanwerkstoff und anderseits aus einem Aluminiumwerkstoff geben.

Der Erfindung liegt somit die Aufgabe zugrunde, ein Verfahren und eine Vorrichtung zum Herstellen einer zumindest auf einer Seite abgeschrägten Stoßkante eines Bleches aus einem Eisen- oder Titanwerkstoff der eingangs geschilderten Art so auszugestalten, dass einerseits der Herstellungsaufwand verringert und anderseits die Lötverbindung zwischen dem Zusatzwerkstoff auf Aluminiumbasis und dem Blech aus einem Eisen- oder Titanwerkstoff verbessert werden kann.

Die Erfindung löst die gestellte Aufgabe dadurch, dass das im Fügebereich beschichtete Blech aus dem Eisen- oder Titanwerkstoff durch ein spanloses Kaltverformen im Bereich der Stoßkante ohne Bruch unter einem ständigen Fließen des Werkstoffes abgeschrägt und durchtrennt wird.

Da das Blech aus dem Eisen- oder Titanwerkstoff zufolge dieser Maßnahmen in herkömmlicher Weise vor der Bearbeitung der Stoßkanten für die spätere Schweiß-Lötverbindung mit einem Blech aus einem Aluminiumwerkstoff in bewährter Weise mit einer Beschichtung vorzugsweise auf Zink- oder Aluminiumbasis versehen werden kann, erübrigt sich ein Beschichten dieser Stoßkanten nach ihrer Bearbeitung. Durch das Kaltverformen unter einem Fließen des Werkstoffes kann eine abgeschrägte Stoßkante hergestellt werden, in deren Bereich die Beschichtung erhalten bleibt. Es ist lediglich darauf zu achten, dass das Blech aus dem Eisen- oder Titanwerkstoff ohne Bruch unter einem ständigen Fließen des Werkstoffes bis zum Trennbruch umgeformt wird, weil Bruchflächen naturgemäß keine Beschichtung aufweisen können. Obwohl die Beschichtung im Bereich der abgeschrägten Stoßkanten insbesondere gegen den freien Rand der Abschrägung hin zufolge der für das plastische Verformen erforderlichen Kräfte auf das Blech in ihrer Dicke erheblich verringert werden kann und im Bereich des Trennbruches fehlt, kann beim anschließenden Fügen des Bleches aus dem Eisen- oder Titanwerkstoff mit einem Blech aus einem Aluminiumwerkstoff durch eine Schweiß-Lötverbindung eine nahezu fehlerlose Anbindung auch im Bereich des freien Randes der Abschrägung der Stoßkante erreicht werden. Aufgrund der starken Kaltverfestigung gerade im Bereich des durchtrennenden Abdrückens der Stoßkante kann trotz der dünnen Beschichtung und selbst im Bereich von Beschichtungslücken entlang des freien Randes der Abschrägungen eine hohe Reaktivität festgestellt werden, die für eine gute Werkstoffanbindung sorgt. Dazu kommt, dass wegen der geringen Beschichtungsdicke die Gefahr einer Porenbildung herabgesetzt wird, so dass sich nicht nur vereinfachte Herstellungsbedingungen für die abgeschrägte, beschichtete Stoßkante des Bleches aus einem Eisen- oder Titanwerkstoff ergeben, sondern auch ein Stoßkantenaufbau sichergestellt werden kann, der verbesserte Anbindungsverhältnisse für den aufzuschmelzenden Zusatzwerkstoff auf Aluminiumbasis mit sich bringt.

Obwohl zum spanlosen Kaltverformen des Stoßkantenbereichs eines Bleches aus einem Eisen- oder Titanwerkstoff unterschiedliche Umformwerkzeuge, beispielsweise Formwalzen, eingesetzt werden können, ergeben sich besonders günstige Konstruktionsverhältnisse dadurch, dass ein entlang der zu formenden Stoßkante des Bleches aus dem Eisen- oder Titanwerkstoff verlaufendes, mit einem Gegenwerkzeug zusammenwirkendes Drückerwerkzeug vorgesehen wird, das eine mit der Blechebene einen Winkel von höchstens 35° einschließende, die Abschrägung bestimmende und in einer Abdrückkante auslaufende Arbeitsfläche aufweist. Durch die unter einem bestimmten Winkel gegenüber der Blechebene verlaufende Arbeitsfläche des Drückerwerkzeuges wird eine Abschrägung der Stoßkante durch ein Fließen des Werkstoffes als Voraussetzung für ein möglichst spätes Durchtrennen des Bleches mit Hilfe der Abdrückkante erreicht, die mit dem Gegenwerkzeug zusammenwirkt und in der die Arbeitsfläche ausläuft, sodass das Blech bis zum Durchtrennen einer plastischen Verformung unterworfen bleibt. Weist zudem das Drückerwerkzeug eine von der Abdrückkante auf der der Arbeitsfläche abgekehrten Seite abfallende Schulter auf, wobei die Schulter unter einem steileren Winkel geneigt ist, sodass beim Durchtrennen des Blechs die Beschichtung des Blechs im Bereich der abfallenden Schulter abreißt, können mit einer solchen Anordnung die für das Durchtrennen des Bleches erforderlichen Presskräfte erheblich verringert werden, ohne einen frühzeitigen Bruch in Kauf nehmen zu müssen.

Das Gegenwerkzeug kann zudem eine zum Drückerwerkzeug symmetrische Anordnung der Arbeitsfläche, der Schulter und der Abdrückkante aufweisen.

Anhand der Zeichnung wird das erfindungsgemäße Verfahren näher beschrieben.
Es zeigen
- Fig. 1: eine erfindungsgemäße Vorrichtung zum Herstellen einer abgeschrägten Stoßkante eines Bleches aus einem Eisen- oder Titanwerkstoff in einer schematischen Seitenansicht,
- Fig. 2: die Vorrichtung nach der Fig. 1 in der Anschlagstellung nach dem Durchtrennen des Bleches und
- Fig. 3: eine der Fig. 1 entsprechende Darstellung einer Konstruktionsvariante einer erfindungsgemäßen Vorrichtung.

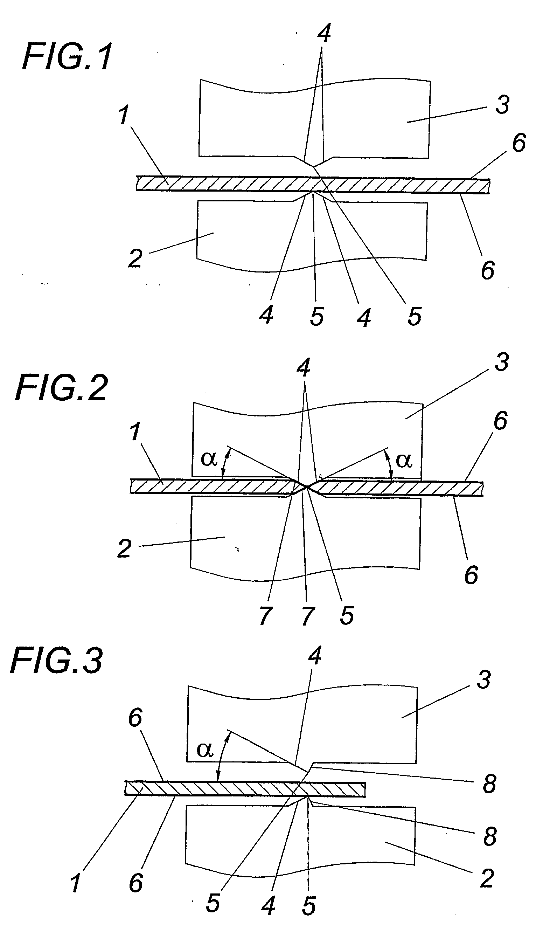

Die Vorrichtung zum Herstellen einer abgeschrägten Stoßkante eines Bleches 1 aus einem Eisen- oder Titanwerkstoff gemäß den Fig. 1 und 2 weist ein mit einem Gegenwerkzeug 2 zusammenwirkendes Drückerwerkzeug 3 auf, das zusammen mit dem Gegenwerkzeug 2 in eine Presse eingesetzt wird. Das Drückerwerkzeug 3 bildet zwei gegensinnig unter einem Winkel α gegenüber der Blechebene geneigt verlaufende Arbeitsflächen 4 mit einer Abdrückkante 5 zwischen diesen Arbeitsflächen 4. Das Gegenwerkzeug 2 ist hinsichtlich der Arbeitsflächen 4 und der Abdrückkante 5 symmetrisch zum Drückerwerkzeug 2 aufgebaut. Wird das Drückerwerkzeug 3 über die Presse mit einer entsprechenden Kraft beaufschlagt, so dringen die Abdrückkanten 5 und von diesen Abdrückkanten 5 ausgehend die anschließenden Arbeitsflächen 4 in das Blech 1 unter einem Fließen des Eisen- oder Titanwerkstoffes ein, bis die Abdrückkanten 5 aufeinanderstoßen und das Blech 1 gemäß der Fig. 2 durchtrennen. Mit Neigungswinkeln α von höchstens 35° wird sichergestellt, dass der Trennvorgang unter einem ständigen Fließen des Eisen- oder Titanwerkstoffes erfolgt und aufgrund der damit verbundenen plastischen Verformung ein vorzeitiger Bruch vermieden wird. Voraussetzung hierfür ist, dass sich die Abdrückkanten 5 des Drückerwerkzeuges 3 und des Gegenwerkzeuges 2 bezüglich des Bleches 1 genau gegenüberliegen, so dass es zu keinen einen Bruch nach sich ziehenden Scherkräften kommt. Unter diesen Voraussetzungen gelingt es in vorteilhafter Weise die Beschichtung 6 beispielsweise auf Zinkbasis im Bereich der durch die Arbeitsflächen 4 bestimmten Abschrägungen 7 der beim Durchtrennen des Bleches 1 erhaltenen Stoßkanten der beiden Blechteile zumindest in einem Ausmaß zu erhalten, das eine vorteilhafte Anbindung des jeweiligen Teiles des Bleches 1 an ein Blech aus einem Aluminiumwerkstoff über einen beidseitig aufgeschmolzenen Zusatzwerkstoff auf Aluminiumbasis erlaubt. Der Winkel α für die Arbeitsflächen 4 und damit für die Abschrägungen 7 der Stoßkanten wird in Abhängigkeit vom Fließverhalten des jeweiligen Eisen- oder Titanwerkstoffes gewählt und kann beispielsweise in einem Bereich zwischen 20 und 25° liegen.

Gemäß dem Ausführungsbeispiel nach der Fig. 3 weisen das Gegenwerkzeug 2 und das Drückerwerkzeug 3 jeweils nur eine unter dem Neigungswinkel α geneigte Arbeitsfläche 4 auf, die in der Abdrückkante 5 ausläuft. Die von der Abdrückkante 5 auf der der Arbeitsfläche 4 abgekehrten Seite abfallende Schulter 8 ist unter einem erheblich steileren Winkel geneigt. Mit einer solchen Anordnung können die für das Durchtrennen des Bleches 1 erforderlichen Presskräfte erheblich verringert werden, ohne einen frühzeitigen Bruch in Kauf nehmen zu müssen. Während die Beschichtung 6 beim Durchtrennen des Bleches 1 im Bereich der durch die Arbeitsflächen 4 geformten Abschrägungen 7 erhalten bleibt, reißt diese Beschichtung im Bereich der abfallenden Schultern 8 ab, so dass nach dem Durchtrennen des Bleches 1 der abgetrennte Teil als Abfall anzusehen ist.

## Patentansprüche

1. Verfahren zum Herstellen einer zumindest auf einer Seite abgeschrägten Stoßkante eines Bleches (1) aus einem Eisen- oder Titanwerkstoff, das mit einem Blech aus einem Aluminiumwerkstoff durch eine Schweiß-Lötverbindung unter Verwendung eines Zusatzwerkstoffes auf Aluminiumbasis gefügt wird und im Fügebereich eine Beschichtung (6) vorzugsweise auf Zink- oder Aluminiumbasis aufweist, **dadurch gekennzeichnet, dass** das im Fügebereich beschichtete Blech (1) aus dem Eisen- oder Titanwerkstoff durch ein spanloses Kaltverformen im Bereich der Stoßkante ohne Bruch unter einem ständigen Fließen des Werkstoffes abgeschrägt und durchtrennt wird.

2. Vorrichtung zum Durchführen des Verfahrens nach Anspruch 1, **dadurch gekennzeichnet, dass** ein entlang der zu formenden Stoßkante des beschichteten Bleches (1) aus dem Eisen- oder Titanwerkstoff verlaufendes, mit einem Gegenwerkzeug (2) zusammenwirkendes Drückerwerkzeug (3) vorgesehen ist, das eine mit der Blechebene einen Winkel (α) von höchstens 35° einschließende, die Abschrägung (7) bestimmende und in einer Abdrückkante (5) auslaufende Arbeitsfläche (4) aufweist, wobei das Drückerwerkzeug (3) eine von der Abdrückkante (5) auf der der Arbeitsfläche (4) abgekehrten Seite abfallende Schulter (8) aufweist, wobei die Schulter (8) unter einem steileren Winkel geneigt ist, sodass beim Durchtrennen des Blechs (1) die Beschichtung (6) des Blechs (1) im Bereich der abfallenden Schulter (8) abreißt.

3. Vorrichtung nach Anspruch 2, **dadurch gekennzeichnet, dass** das Gegenwerkzeug (2) eine zum Drückerwerkzeug (3) symmetrische Anordnung der Arbeitsfläche (4), der Schulter (8) und der Abdrückkante (5) aufweist.

## Claims

1. A method for the production of an abutting edge bevelled on at least one side of a sheet (1) made of an iron or titanium material, said sheet being joined to a sheet made of an aluminium material by a braze-welded connection by using a filler material based on an aluminium material and comprising in the joining region a coating (6) preferably based on a zinc or aluminium material, **characterized in that** the sheet (1) which is made of the iron or titanium material and which is coated in the joining region is chamfered and severed without fracturing by non-cutting cold-working in the region of the abutting edge under continuous flow of the material.

2. An apparatus for carrying out the method according to claim 1, **characterized in that** a pusher tool (3) is provided which extends along the abutting edge to be formed of the coated sheet (1) made of iron or titanium material and which pusher tool cooperates with a counter-tool (2) and comprises a working surface (4) assuming an angle (α) with the sheet plane of not more than 35°, determining the bevel (7) and running out in a separation edge (5), wherein the pusher tool (3) comprises a shoulder (8) sloping downwardly from the separation edge (5) on the side facing away from the working surface (4), wherein the shoulder (8) is inclined at a steeper angle, so that during the severing of the sheet (1) the coating (6) of the sheet (1) tears off in the region of the downwardly sloping shoulder (8).

3. An apparatus according to claim 2, **characterized in that** the counter-tool (2) has an arrangement of the working surface (4), the shoulder (8) and the separation edge (5) which is symmetrical to the pusher tool (3).

## Revendications

1. Procédé pour fabriquer un bord d'assemblage biseauté au moins sur un côté sur une tôle (1) faite d'un matériau à base de fer ou de titane qui est assemblée avec une tôle faite d'un matériau à base d'aluminium par un assemblage soudobrasé en utilisant un métal d'apport à base d'aluminium et qui présente au niveau du joint un revêtement (6) de préférence à base de zinc ou d' aluminium, **caractérisé en ce que** la tôle (1) en matériau à base de fer ou de titane revêtue au niveau du joint est biseautée et sectionnée par déformation à froid sans enlèvement de matière au niveau du bord d'assemblage, sans cassure, en faisant fluer le matériau de façon continue.

2. Dispositif pour la mise en oeuvre du procédé selon la revendication 1, **caractérisé en ce qu'**il est prévu outil presseur (3) passant le long du bord d'assemblage à mettre en forme de la tôle revêtue (1) faite du matériau à base de fer ou de titane et coopérant avec un outil opposé (2), qui présente une surface de travail (4) formant avec le plan de la tôle un angle (α) d'au moins 35°, déterminant le biseau (7) et finissant dans un bord de refoulement (5), lequel outil presseur (3) présente un épaulement (8) descendant du bord de refoulement (5) du côté opposé à la surface de travail (4), l'épaulement (8) étant incliné sous un angle plus pentu, de sorte que quand la tôle (1) est sectionnée, le revêtement (6) de la tôle (1) se déchire au niveau de l'épaulement (8) descendant.

3. Dispositif selon la revendication 2, **caractérisé en ce que** l'outil opposé (2) présente une disposition de la surface de travail (4), de l'épaulement (8) et du bord de refoulement (5) symétrique par rapport à l'outil presseur (3).
